# EUROPEAN PATENT APPLICATION

(11) **EP 3 527 797 A1**
(43) Date of publication of application: **21.08.2019**
(21) Application number: 17860915.2
(22) Date of filing: 29.08.2017
(51) Int. Cl.: F01N 3/24, B01D 53/86, F01N 3/20, F02D 45/00

(54) **GAS ENGINE SYSTEM**

(30) Priority: 13.10.2016 JP 2016201656
(71) Applicant: Kawasaki Jukogyo Kabushiki Kaisha, Kobe-shi, Hyogo 650-8670 (JP)
(72) Inventor: NONAKA, Yosuke, Hyogo 650-8670 (JP); HORIE, Takashi, Hyogo 650-8670 (JP); HIGUCHI, Takafumi, Hyogo 650-8670 (JP); KIYOTAKI, Gen, Hyogo 650-8670 (JP); NAKAI, Masato, Hyogo 650-8670 (JP)
(74) Representative: Dehns
(86) International application number: PCT/JP2017/030953
(87) International publication number: WO 2018/070126

(57) **Abstract**

A gas engine system includes: a gas engine including a crank shaft and a plurality of cylinders arranged parallel to an axial direction of the crank shaft; an exhaust pipe extending over the plurality of cylinders in a bridging manner, the exhaust pipe being a pipe into which exhaust gas discharged from the gas engine flows; a turbocharger configured to feed compressed air into the gas engine, the turbocharger using the exhaust gas as a driving source thereof; a connecting pipe connecting between a first exhaust gas outlet of the exhaust pipe and an exhaust gas inlet of the turbocharger and forming an exhaust gas passage that extends from the exhaust pipe to the turbocharger; a catalyst converter provided in the exhaust gas passage, the catalyst converter incorporating therein a catalyst that oxidizes uncombusted fuel gas in the exhaust gas; and an overheating inhibiting device configured to inject, in a part of the exhaust gas passage, at least one of inert gas, air, steam, and water as an overheating inhibiting agent that inhibits overheating of the catalyst, the part of the exhaust gas passage extending from the first exhaust gas outlet to the catalyst converter.

## Description

### Technical Field

The present invention relates to a gas engine system including a catalyst that is set in an exhaust gas passage extending from a gas engine to a turbocharger.

### Background Art

Conventionally, there have been known gas engine systems that include: a gas engine that combusts fuel gas to drive, for example, a power generator; and a turbocharger that uses exhaust gas discharged from the gas engine as a driving source and feeds compressed air into the gas engine.

There are cases where such a gas engine system adopts a gas engine of a flame propagation type, which ignites an air-fuel mixture supplied into a combustion chamber by pilot light (e.g., by a spark generated by a spark plug or by self-ignition of pilot oil), the air-fuel mixture being a mixture of fuel gas and compressed air. In such a case, part of the fuel gas is left uncombusted near the wall surface of the combustion chamber, and the uncombusted fuel gas is discharged from the gas engine together with exhaust gas. For example, in a case where natural gas, which contains methane as a main component, is used as the fuel gas, the uncombusted fuel gas in the exhaust gas contains a large amount of methane.

To address such a problem, Patent Literature 1 discloses combusting (oxidizing) the uncombusted fuel gas in the exhaust gas by using a catalyst. The catalyst is set in an exhaust gas passage that extends from the gas engine to the upstream side of the turbocharger. The temperature of the exhaust gas before it is expanded in the turbocharger is high. Accordingly, in a case where the catalyst is set in the exhaust gas passage that extends from the gas engine to the turbocharger, the uncombusted fuel gas can be oxidized by the catalyst more efficiently than in a case where the catalyst is set downstream of the turbocharger.

An exhaust gas purifying catalyst widely used for purifying the hydrocarbon contained in the exhaust gas of an internal combustion engine by oxidation as described above is obtained by coating the surface of a support base material made of a metal, such as a metal honeycomb, with a coating material that supports a catalytically active component. It is known that a metal honeycomb is, when overheated, rendered unstable due to, for example, burning damage occurring thereto. In this respect, there has been a conventionally proposed technique for preventing overheating of the catalyst. For example, Patent Literature 2 discloses an apparatus that is configured in the following manner: an exhaust passage extending from an internal combustion engine is provided with a bypass passage that bypasses a catalyst; the catalyst is provided with a catalyst temperature sensor; and when the temperature of the catalyst reaches its upper limit heatproof temperature, exhaust gas flows through the bypass passage.

### Citation List

### Patent Literature

PTL 1: Japanese Laid-Open Patent Application Publication No. H11-350942
PTL 2: Japanese Laid-Open Patent Application Publication No. 2006-29086

### Summary of Invention

### Technical Problem

In a gas engine system including a catalyst that is set in an exhaust passage extending from a gas engine to a turbocharger, e.g., the above-described gas engine system of Patent Literature 1, the exhaust gas flowing into the catalyst has a higher temperature than in a case where the catalyst is set downstream of the turbocharger. In the above gas engine system, for example, after the gas engine has stopped operating, if the gas engine is re-started before the catalyst is cooled sufficiently, it is expected that the exhaust gas that has a relatively high temperature and that contains a high concentration of uncombusted fuel gas will flow into the catalyst. If the concentration of the uncombusted fuel gas introduced into the catalyst is higher than the treatment capacity of the catalyst, the catalyst will become overheated due to abnormal oxidation, and as a result, burning damage may occur to the catalyst. In this respect, as described in Patent Literature 2, for the purpose of preventing the overheating of the catalyst, it is conceivable to form a bypass passage that causes the exhaust gas of the internal combustion engine to flow to the downstream side without passing through the catalyst. However, in the case of forming the bypass passage, the piping becomes complex due to the bypass passage, and therefore, the system tends to become complex and increase in size.

In view of the above, an object of the present invention is, in a gas engine system including a catalyst set in an exhaust gas passage extending from a gas engine to a turbocharger, to prevent burning damage to the catalyst while reducing complexity of the system and suppressing increase in the size of the system.

### Solution to Problem

A gas engine system according to one aspect of the present invention includes: a gas engine including a crank shaft and a plurality of cylinders arranged parallel to an axial direction of the crank shaft; an exhaust pipe extending over the plurality of cylinders in a bridging manner, the exhaust pipe being a pipe into which exhaust gas discharged from the gas engine flows; a turbocharger configured to feed compressed air into the gas engine, the turbocharger using the exhaust gas as a driving source thereof; a connecting pipe connecting between a first exhaust gas outlet of the exhaust pipe and an exhaust gas inlet of the turbocharger and forming an exhaust gas passage that extends from the exhaust pipe to the turbocharger; a catalyst converter provided in the exhaust gas passage, the catalyst converter incorporating therein a catalyst that oxidizes uncombusted fuel gas in the exhaust gas; and an overheating inhibiting device configured to inject, in a part of the exhaust gas passage, at least one of inert gas, air, steam, and water as an overheating inhibiting agent that inhibits overheating of the catalyst, the part of the exhaust gas passage extending from the first exhaust gas outlet to the catalyst converter.

According to the above gas engine system, the catalyst and the overheating inhibiting agent come into direct contact with each other, and thereby the catalyst is cooled. Accordingly, overheating of the catalyst is inhibited, and burning damage to the catalyst can be prevented. It should be noted that in a case where the overheating inhibiting agent is inert gas and/or air, the uncombusted fuel gas concentration in the exhaust gas fed to the catalyst is lowered, and thereby overheating of the catalyst is inhibited. Also, in a case where the overheating inhibiting agent is steam and/or water, the activity of the catalyst is lowered, and thereby overheating of the catalyst is inhibited.

According to the above overheating inhibiting device, the overheating inhibiting agent comes into direct contact with the catalyst, and thereby an overheating inhibiting effect is exerted efficiently. Also, compared to a case where different overheating inhibiting means, for example, a jacket-type cooling device, is adopted as the overheating inhibiting device, the overheating inhibiting device can be made more compact, and this configuration makes it possible to prevent burning damage to the catalyst while reducing complexity of the system and suppressing increase in the size of the system.

The above gas engine system may further include at least one of a first bypass pipe and a second bypass pipe. The first bypass pipe connects between a second exhaust gas outlet of the exhaust pipe and a downstream portion of the connecting pipe, and forms a bypass passage that extends from the exhaust pipe to the turbocharger in a manner to bypass the catalyst converter. The second bypass pipe connects between the second exhaust gas outlet of the exhaust pipe and an intake side of the gas engine, and forms a bypass passage that extends from the exhaust pipe to the gas engine in a manner to bypass the catalyst converter and the turbocharger.

According to the above gas engine system, when overheating of the catalyst is expected to occur, the exhaust gas flows to the downstream side of the catalyst through the bypass pipe(s), and thereby overheating of the catalyst can be avoided.

In the above gas engine system, the exhaust pipe may extend parallel to the axial direction of the crank shaft. One end portion of the exhaust pipe may be provided with the first exhaust gas outlet, and another end portion of the exhaust pipe may be provided with the second exhaust gas outlet. The turbocharger may be disposed adjacently to the second exhaust gas outlet of the exhaust pipe. The expression "disposed adjacently" means that at least part of the turbocharger is present within a space that is defined by an expanded contour of the gas engine, the expanded contour being obtained by expanding the contour of the gas engine such that the length, width, and height of the gas engine from its center are increased by 1.5 times.

In the above gas engine system, the turbocharger is disposed adjacently to the second exhaust gas outlet of the exhaust pipe, and the first exhaust gas outlet is provided at one end portion of the exhaust pipe, the one end portion being positioned opposite to the other end portion at which the second exhaust gas outlet is provided. This configuration makes it possible to dispose the catalyst converter adjacently to the first exhaust gas outlet of the exhaust pipe. That is, each of the turbocharger and the catalyst converter can be disposed adjacently to the gas engine. In addition, the second exhaust gas outlet of the exhaust pipe is connected to at least one of the exhaust gas inlet of the turbocharger and the intake side of the gas engine by the bypass pipe(s). Since the second exhaust gas outlet, the exhaust gas inlet, and the intake side of the gas engine can be arranged adjacently to each other, the length of the piping of the bypass pipes can be reduced, which makes it possible to reduce complexity of the system and suppress increase in the size of the system.

The above gas engine system may further include: a first valve provided on the part of the exhaust gas passage, the part extending from the first exhaust gas outlet to the catalyst converter; a second valve provided on each of the bypass passages; a catalyst thermometer configured to measure a temperature of the catalyst; an uncombusted fuel gas concentration meter configured to measure a concentration of the uncombusted fuel gas in the part of the exhaust gas passage, the part extending from the first exhaust gas outlet to the catalyst converter; and a controller configured to, when the concentration of the uncombusted fuel gas measured by the uncombusted fuel gas concentration meter is higher than a predetermined allowable concentration and the temperature of the catalyst measured by the catalyst thermometer is higher than a predetermined allowable temperature, control the first valve and the second valve to decrease a degree of opening of the first valve and increase a degree of opening of the second valve. It should be noted that, in the description above and below, the "predetermined allowable concentration" is the upper limit concentration of an uncombusted fuel gas concentration range suitably defined corresponding to the treatment capacity of the catalyst, or is a concentration lower than the upper limit concentration. Similarly, in the description above and below, the "predetermined allowable temperature" is the upper limit temperature of a temperature range suitably defined corresponding to the heatproof temperature of the catalyst, or is a temperature lower than the upper limit temperature.

According to the above configuration, when the catalyst temperature is higher than the predetermined allowable temperature and the concentration of the uncombusted fuel gas fed to the catalyst is higher than the predetermined allowable concentration, the amount of exhaust gas flowing to the catalyst is decreased, and the amount of exhaust gas flowing downstream in a manner to bypass the catalyst is increased, which makes it possible to inhibit overheating of the catalyst.

In the above gas engine system, when the concentration of the uncombusted fuel gas measured by the uncombusted fuel gas concentration meter is higher than the predetermined allowable concentration and the temperature of the catalyst measured by the catalyst thermometer is higher than the predetermined allowable temperature, the controller may control the first valve and the second valve to close the first valve and open the second valve.

According to the above configuration, when the catalyst temperature is higher than the predetermined allowable temperature and the concentration of the uncombusted fuel gas fed to the catalyst is higher than the predetermined allowable concentration, the exhaust gas flows downstream in a manner to bypass the catalyst, which makes it possible to inhibit overheating of the catalyst.

### Advantageous Effects of Invention

The present invention makes it possible to prevent burning damage to the catalyst by inhibiting overheating of the catalyst while reducing complexity of the system and suppressing increase in the size of the system.

### Brief Description of Drawings

FIG. 1 shows a schematic configuration of a gas engine system according to an embodiment of the present invention.
FIG. 2A shows a view of the gas engine system of FIG. 1 as seen from a power generator side.
FIG. 2B shows a view of the gas engine system of FIG. 1 as seen from a turbocharger side.
FIG. 3 is a sectional view of part of a gas engine and an exhaust pipe included in the gas engine system of FIG. 1.
FIG. 4 is a longitudinal sectional view of a catalyst converter.
FIG. 5 shows a control configuration of the gas engine system.
FIG. 6 is a flowchart of catalyst overheating prevention control performed by an engine controller.
FIG. 7 shows a schematic configuration of the gas engine system according to a variation.

### Description of Embodiments

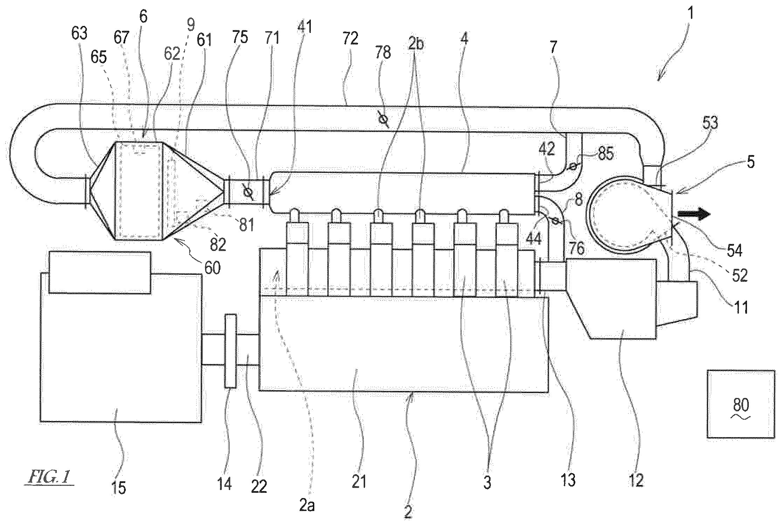

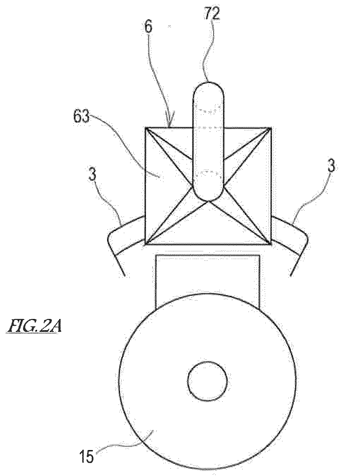

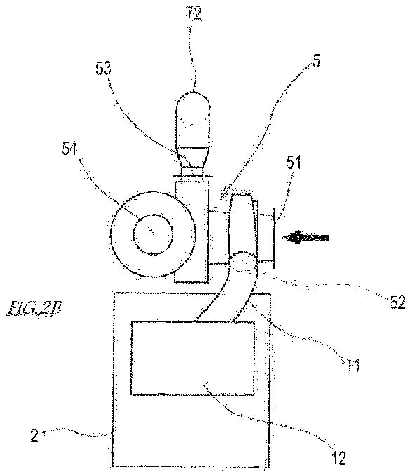

FIG. 1, FIG. 2A, and FIG. 2B show a gas engine system 1 according to an embodiment of the present invention. The embodiment is intended for realizing a suitable layout for a 4-stroke gas engine.

The gas engine system 1 includes: a 4-stroke gas engine 2, which combusts fuel gas; and a power generator 15 driven by the gas engine 2. The gas engine system 1 further includes: a turbocharger 5 disposed adjacently to the gas engine 2; an air cooler 12 and a catalyst converter 6, each of which is provided between the gas engine 2 and the turbocharger 5; and an engine controller 80. The above expression that the turbocharger 5 is "disposed adjacently" to the gas engine 2 means that at least part of the turbocharger 5 is present within a space that is defined by an expanded contour of the gas engine 2, the expanded contour being obtained by expanding the contour of the gas engine 2 such that the length, width, and height of the gas engine 2 from its center are increased by 1.5 times.

The gas engine 2 includes: a crank shaft 22; an engine frame 21, which accommodates large part of the crank shaft 22; and a plurality of cylinders 3 protruding from the engine frame 21. An end portion of the crank shaft 22, the end portion projecting from the engine frame 21, is coupled to the power generator 15 via a flywheel 14. At a start of the gas engine 2, the flywheel 14 is driven by an unshown starter motor that is an air motor.

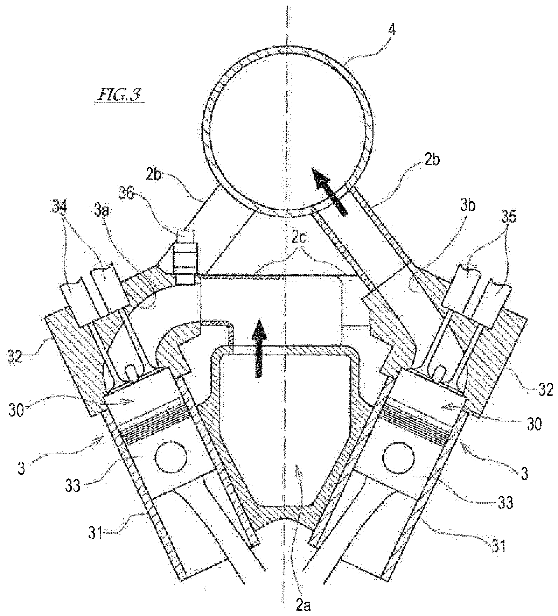

As shown in FIG. 3, the plurality of cylinders 3 are incorporated in the engine frame 21. In the present embodiment, the cylinders 3 are arranged in the axial direction of the crank shaft 22 in two rows. One row of cylinders 3 and the other row of cylinders 3 are inclined relative to the vertical direction at the same angle. When seen in the axial direction of the crank shaft 22, the angle between the cylinders 3 is an acute angle, and the cylinders 3 form a V shape. It should be noted that the one row of cylinders 3 and the other row of cylinders 3 may be inclined relative to the vertical direction at different angles from each other. Moreover, the angle between the cylinders 3 when seen in the axial direction of the crank shaft 22 may be the right angle such that the cylinders 3 form an L shape. Furthermore, the cylinders 3 may be arranged in a single row.

Each cylinder 3 is provided with a combustion chamber 30. Each cylinder 3 forms the combustion chamber 30 together with a piston 33 disposed in the cylinder 3 and a corresponding one of cylinder heads 32. An intake port 3a and an exhaust port 3b are formed in each cylinder head 32. The cylinder head 32 is also provided with intake valves 34 and exhaust valves 35. The intake valves 34 open/close the opening of the intake port 3a to the combustion chamber 30, and the exhaust valves 35 open/close the opening of the exhaust port 3b to the combustion chamber 30. The cylinder head 32 is further provided with a fuel valve 36, which injects the fuel gas into the intake port 3a. The fuel gas is, for example, natural gas containing methane as a main component.

Between the one row of cylinders 3 and the other row of cylinders 3 of the engine frame 21, an intake chamber 2a is formed, which extends in the axial direction of the crank shaft 22. The intake ports 3a of the respective cylinders 3 are each connected to the intake chamber 2a by a corresponding one of first communication pipes 2c.

Immediately above the intake chamber 2a, an exhaust pipe 4 extending in the axial direction of the crank shaft 22 is disposed. The exhaust ports 3b of the respective cylinders 3 are each connected to the exhaust pipe 4 by a corresponding one of second communication pipes 2b.

Returning to FIG. 1, the turbocharger 5 is disposed at a position that is away, in a direction parallel to the axial direction of the crank shaft 22, from one end portion of the exhaust pipe 4, the one end portion being positioned opposite to the other end portion positioned at the power generator 15 side. In other words, the turbocharger 5 is disposed opposite to the power generator 15, with the gas engine 2 being positioned between the turbocharger 5 and the power generator 15. Hereinafter, for the sake of convenience of the description, the axial direction of the crank shaft 22 is referred to as the forward-rearward direction (in particular, the turbocharger 5 side is referred to as the forward side, and the power generator 15 side is referred to as the rearward side), and the horizontal direction orthogonal to the forward-rearward direction is referred to as the right-left direction (in particular, the front side of the direction orthogonal to the plane of FIG. 1 is referred to as the right side, and the back side of the direction is referred to as the left side).

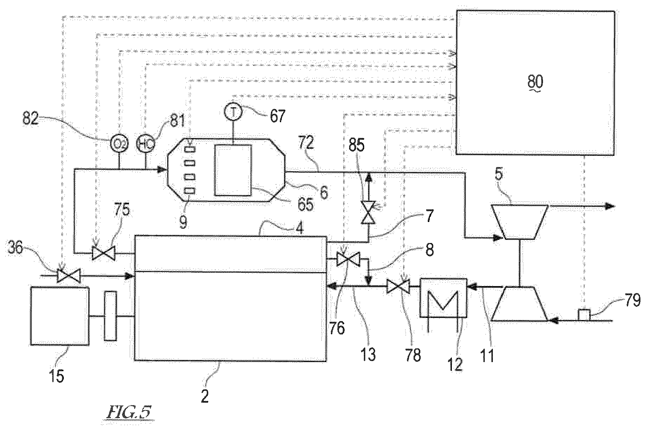

The turbocharger 5 includes: a compressor including an air inlet 51 and an air outlet 52; and a turbine including an exhaust gas inlet 53 and an exhaust gas outlet 54. At a position upstream of the air inlet 51 of the turbocharger 5, an airflow meter 79 configured to measure the air flow rate of the turbocharger 5 is provided (see FIG. 5). In the present embodiment, the air inlet 51 is open to the left, and the air outlet 52 is open diagonally downward. Meanwhile, the exhaust gas inlet 53 is open upward (in a direction different from a direction toward the exhaust pipe 4), and the exhaust gas outlet 54 is open forward.

The air cooler 12 is disposed immediately below the turbocharger 5 and forward of the gas engine 2. The air outlet 52 of the turbocharger 5 is connected to the air cooler 12 by a first intake pipe 11, and the air cooler 12 is connected to the intake chamber 2a by a second intake pipe 13. The first intake pipe 11 extends diagonally downward and then smoothly bends diagonally sideways. The second intake pipe 13 has a straight shape extending in the forward-rearward direction.

The catalyst converter 6 is disposed above the power generator 15. In other words, the catalyst converter 6 is disposed opposite to the turbocharger 5, with the exhaust pipe 4 being positioned between the catalyst converter 6 and the turbocharger 5. The catalyst converter 6 includes an inlet open forward and an outlet open rearward, and the catalyst converter 6 incorporates therein catalysts that oxidize uncombusted fuel gas contained in exhaust gas discharged from the gas engine 2.

The rearward end portion of the exhaust pipe 4 is provided with a first exhaust gas outlet 41, which is open rearward (in a direction different from a direction toward the turbocharger 5). The forward end portion of the exhaust pipe 4 is provided with second exhaust gas outlets (an upper outlet 42 and a lower outlet 44), which are open forward. The first exhaust gas outlet 41 of the exhaust pipe 4 is connected to the inlet of the catalyst converter 6 by a first connecting pipe 71, and the outlet of the catalyst converter 6 is connected to the exhaust gas inlet 53 of the turbocharger 5 by a second connecting pipe 72. In other words, the first exhaust gas outlet 41 and the exhaust gas inlet 53 are connected to each other by the connecting pipes 71 and 72, and the catalyst converter 6 is interposed between the connecting pipe 71 and the connecting pipe 72. The connecting pipes 71 and 72 (and the catalyst converter 6) form an exhaust gas passage extending from the exhaust gas outlet 41 of the exhaust pipe 4 to the exhaust gas inlet 53 of the turbocharger 5. The catalyst converter 6 is provided in the exhaust gas passage.

The first connecting pipe 71 has a straight shape extending in the forward-rearward direction. On the other hand, the second connecting pipe 72 includes: a straight portion extending in the forward-rearward direction above the catalyst converter 6 and the exhaust pipe 4; a 180-degree bent portion extending from the outlet of the catalyst converter 6 to the upstream end of the straight portion; and a 90-degree bent portion extending from the downstream end of the straight portion to the exhaust gas inlet 53 of the turbocharger 5. Although not illustrated, expandable and contractable members intended for absorbing thermal expansion may be incorporated at suitable positions in the first connecting pipe 71 and the second connecting pipe 72.

The exhaust pipe 4 is provided with the two second exhaust gas outlets, which are the upper outlet 42 and the lower outlet 44. The upper outlet 42 is connected to the upstream end portion of a first bypass pipe 7. The downstream end portion of the first bypass pipe 7 is connected to the second connecting pipe 72, which connects between the outlet of the catalyst converter 6 and the exhaust gas inlet 53 of the turbocharger 5. The first bypass pipe 7 bends by 90 degrees from the upper outlet 42, and is joined to the straight portion of the second connecting pipe 72 from below. Through the bypass pipe 7, the exhaust gas is fed from the exhaust pipe 4 to the upstream side of the turbocharger 5 in a manner to bypass the catalyst converter 6, i.e., without passing through the catalyst converter 6.

The second connecting pipe 72 is provided with a check valve 78, which is positioned between the outlet of the catalyst converter 6 and a connection point where the first bypass pipe 7 is connected to the second connecting pipe 72. The check valve 78 allows a flow of the exhaust gas from the catalyst converter 6 to the turbocharger 5. The check valve 78 is normally open, and is closed at the time of performing maintenance of catalysts 65 of the catalyst converter 6, which will be described below.

Of the second exhaust gas outlets of the exhaust pipe 4, the lower outlet 44 is connected to the upstream end portion of a second bypass pipe 8. The downstream end portion of the second bypass pipe 8 is connected to the second intake pipe 13, which connects between the air cooler 12 and the intake side of the gas engine 2. The second bypass pipe 8 forms an exhaust gas recirculation (EGR) passage, thorough which the exhaust gas from the exhaust pipe 4 is fed to the intake side of the gas engine 2 without passing thorough the catalyst converter 6. It should be noted that, alternatively, the downstream end portion of the second bypass pipe 8 may be connected to the intake side of the turbocharger 5 or to the first intake pipe 11, because the second bypass pipe 8 is only required to be capable of feeding the exhaust gas of the gas engine 2 to the intake side of the gas engine 2. Further alternatively, the downstream end portion of the second bypass pipe 8 may be connected to the exhaust side of the turbocharger 5. In the above example, the exhaust pipe 4 is provided with the two second exhaust gas outlets 42 and 44. However, as an alternative, the exhaust pipe 4 may be provided with only one second exhaust gas outlet, and both the first bypass pipe 7 and the second bypass pipe 8 may be connected to the one second exhaust gas outlet via a branch joint.

Normally, the exhaust gas from the exhaust pipe 4 is led to the catalyst converter 6 through the first connecting pipe 71. On the other hand, in a special situation, the exhaust gas is led to the upstream side of the turbocharger 5 through the first bypass pipe 7 without passing through the catalyst converter 6, and is led to the intake side of the gas engine 2 through the second bypass pipe 8 mainly for excess air ratio adjustment. In order to control the flow of the exhaust gas, the first connecting pipe 71 is provided with an exhaust valve 75, which serves as a flow rate adjuster or a passage switcher; the first bypass pipe 7 is provided with an exhaust bypass valve 85, which serves as a flow rate adjuster or a passage switcher; and the second bypass pipe 8 is provided with a bypass valve 76, which serves as a flow rate adjuster. In the present embodiment, butterfly valves are adopted as the respective valves 75, 76, and 85. However, the valves 75, 76, and 85 are not limited to butterfly valves, but may be configured differently.

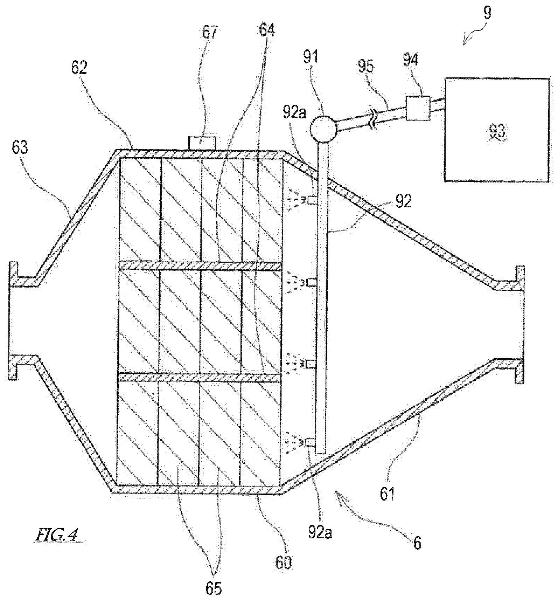

Next, the configuration of the catalyst converter 6 is described in detail with reference to FIG. 4. The catalyst converter 6 includes a casing 60, which accommodates the catalysts 65. The casing 60 includes: a tubular casing body 62, which extends in the forward-rearward direction; an upstream-side hood 61, which expands toward the casing body 62; and a downstream-side hood 63, which narrows from the casing body 62. In the present embodiment, the casing body 62 has a rectangular sectional shape. However, as an alternative, the casing body 62 may have a circular sectional shape, for example. The catalysts 65 are accommodated in the casing body 62. Each of the catalysts 65 is obtained by coating a support base material made of a metal with a coating material that supports a catalytically active component. The support base material may be, for example, a metal honeycomb made of stainless steel, or a metal structure formed by stacking corrugated plates and flat plates alternately. The catalytically active component may be, for example, fine particles of a metal such as platinum or palladium.

The interior of the casing 60 is divided into a plurality of small rooms by a lattice member 64, which supports the catalysts 65. In each small room, a plurality of catalysts 65 are disposed such that they are stacked in the flow direction of the exhaust gas. By removing the casing body 62 from the other part of the casing 60, it becomes possible to readily attach or detach the catalysts 65 to or from the casing body 62. At the time of performing replacement of the catalysts 65, the check valve 78 and the exhaust valve 75 are closed and the bypass valve 85 is opened, which makes it possible to disassemble the catalyst converter 6 and perform the replacement of the catalysts 65 even while the gas engine system 1 is operating.

An uncombusted fuel gas concentration meter 81 is provided upstream of the catalysts 65. The uncombusted fuel gas concentration meter 81 is a hydrocarbon concentration meter configured to measure the hydrocarbon concentration in the exhaust gas of the gas engine 2. The uncombusted fuel gas concentration meter 81 measures the uncombusted fuel gas concentration (hydrocarbon concentration) in the exhaust gas fed to the catalysts 65. Detection of an abnormal uncombusted fuel gas concentration, and catalyst overheating prevention control described below, are performed based on the uncombusted fuel gas concentration in the exhaust gas, which is measured by the uncombusted fuel gas concentration meter 81. It should be noted that the uncombusted fuel gas concentration meter 81 is installed in the catalyst converter 6 or in the first connecting pipe 71, because the uncombusted fuel gas concentration meter 81 is only required to be capable of measuring the uncombusted fuel gas concentration in a passage extending from the exhaust gas outlet 41 to the catalysts 65.

The catalyst converter 6 is provided with a catalyst thermometer 67 configured to detect the temperature of the catalysts 65. Detection of an abnormality in the gas engine 2, the abnormality being of a kind that causes increase in the uncombusted fuel gas concentration (e.g., fuel gas leakage from the fuel valve 36), and the catalyst overheating prevention control described below are performed based on the catalyst temperature detected by the catalyst thermometer 67.

A lambda sensor 82 is provided upstream of the catalysts 65. The lambda sensor 82 is an oxygen concentration meter. Based on, for example, the oxygen concentration in the exhaust gas (i.e., excess air ratio λ) detected by the lambda sensor 82 and the intake air amount of the gas engine 2 detected by the airflow meter 79, the degree of opening of the fuel valve 36 and the degree of opening of the exhaust bypass valve 76 are changed, for example, and thereby the excess air ratio λ is controlled to be a desirable excess air ratio.

The upstream-side hood 61 of the catalyst converter 6 is provided with an overheating inhibiting device 9 configured to inject an overheating inhibiting agent toward the catalysts 65. The overheating inhibiting device 9 is formed by, for example, a main pipe 91 and a plurality of branch pipes 92. The main pipe 91 extends in the right-left direction above the upstream-side hood 61. The plurality of branch pipes 92 hang down from the main pipe 91 into the upstream-side hood 61. Each of the branch pipes 92 is provided with nozzles 92a, which are directed rearward and arranged at regular pitches. An overheating inhibiting agent source 93 supplies the overheating inhibiting agent to the main pipe 91 via a supply pipe 95. The amount of overheating inhibiting agent supplied from the overheating inhibiting agent source 93 is adjusted by a supply amount adjuster 94, such as a valve, provided on the supply pipe 95.

The engine controller (ECU: Engine Control Unit) 80 is a controller controlling the operations of the gas engine system 1. The engine controller 80 includes a CPU, ROM, RAM, A/D converter, input/output interface, etc., which are not shown. As shown in FIG. 5, various instruments such as the catalyst thermometer 67, the airflow meter 79, the uncombusted fuel gas concentration meter 81, and the lambda sensor 82 are electrically connected to the engine controller 80. Detection signals from these various instruments are transmitted to the engine controller 80. Actuators for opening/closing the exhaust valve 75, the check valve 78, the bypass valve 85, the exhaust bypass valve 76, and the fuel valve 36, and the supply amount adjuster 94 of the overheating inhibiting device 9, are electrically connected to the engine controller 80. Control signals from the engine controller 80 are transmitted to these devices. Based on detection signals from the various instruments, the engine controller 80 performs various controls in relation to the operation of the gas engine 2. Hereinafter, the catalyst overheating prevention control that the engine controller 80 performs in order to prevent overheating of the catalysts 65 is described in detail.

Overheating of the catalysts 65 tends to occur, for example, in a case where after the gas engine 2 has stopped operating, the gas engine 2 is re-started before the catalysts 65 are cooled sufficiently. Therefore, the engine controller 80 performs the catalyst overheating prevention control at a start of the gas engine 2. However, the timing of performing the catalyst overheating prevention control is not limited to when the gas engine 2 is started. The catalyst overheating prevention control may also be performed during normal operation of the gas engine 2.

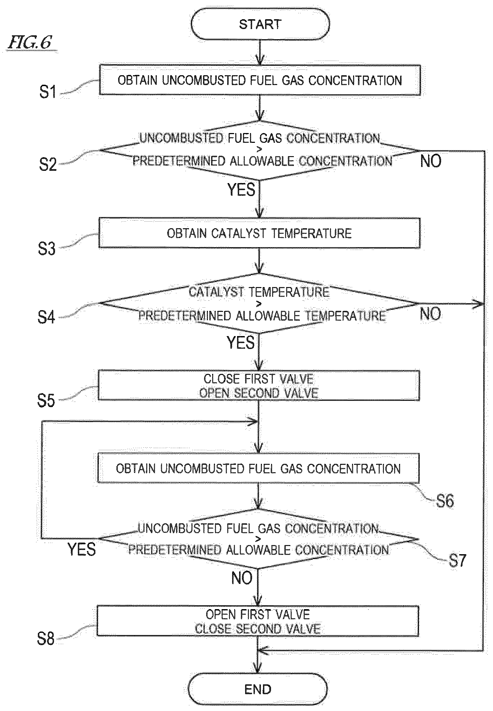

FIG. 6 is a flowchart of the catalyst overheating prevention control performed by the engine controller 80. As shown in FIG. 6, at a start of the gas engine system 1, first, the engine controller 80 obtains the uncombusted fuel gas concentration in the exhaust gas detected by the uncombusted fuel gas concentration meter 81 (step S1). The engine controller 80 compares the detected uncombusted fuel gas concentration with a predetermined allowable concentration (step S2). If the detected uncombusted fuel gas concentration is higher than the predetermined allowable concentration (YES in step S2), the engine controller 80 then obtains the catalyst temperature detected by the catalyst thermometer 67 (step S3). The engine controller 80 compares the detected catalyst temperature with a predetermined allowable temperature (step S4). If the detected catalyst temperature is higher than the predetermined allowable temperature (YES in step S4), the engine controller 80 operates the actuators for opening/closing the exhaust valve 75 and the bypass valve 85 to close the exhaust valve 75 and open the bypass valve 85 (step S5). The engine controller 80 continuously obtains the uncombusted fuel gas concentration detected by the uncombusted fuel gas concentration meter 81 (step S7). When the detected uncombusted fuel gas concentration becomes lower than or equal to the predetermined allowable concentration (YES in step S8), the engine controller 80 operates the actuators for opening/closing the exhaust valve 75 and the bypass valve 85 to open the exhaust valve 75 and close the bypass valve 85 (step S8).

The aforementioned "predetermined allowable concentration" of the uncombusted fuel gas concentration is the upper limit concentration of an uncombusted fuel gas concentration range suitably defined corresponding to the treatment capacity of the catalysts 65, or is a concentration lower than the upper limit concentration. Similarly, the aforementioned "predetermined allowable temperature" is the upper limit temperature of a temperature range suitably defined corresponding to the heatproof temperature of the catalysts 65 (i.e., a temperature range within which thermal degradation of the catalysts does not occur or thermal degradation of the catalysts progresses relatively gradually), or is a temperature lower than the upper limit temperature.

It should be noted that, during normal operation of the gas engine 2, the engine controller 80 monitors the catalyst temperature detected by the catalyst thermometer 67, and basically, when the catalyst temperature exceeds the predetermined allowable temperature, operates the actuators for opening/closing the exhaust valve 75 and the bypass valve 85 to close the exhaust valve 75 and open the bypass valve 85. As a result, the exhaust gas from the gas engine 2 does not pass through the catalyst converter 6, and this makes it possible to inhibit/prevent overheating of the catalysts 65 and degradation of the catalysts 65 caused by overheating. The allowable catalyst temperature during normal operation of the gas engine 2 may be the same as, or different from, the allowable catalyst temperature at a start of the gas engine 2.

In addition to performing the above-described exhaust gas inflow restriction into the catalyst converter 6, the engine controller 80 can control the overheating inhibiting device 9 to inject the overheating inhibiting agent, which has a catalyst overheating inhibiting effect, toward the catalysts. The overheating inhibiting agent is at least one of inert gas, air, steam, and water. Although the overheating inhibiting device 9 according to the present embodiment is configured to inject the overheating inhibiting agent toward the catalysts 65, the overheating inhibiting device 9 may alternatively be configured to inject the overheating inhibiting agent into a passage extending from the exhaust valve 75 to the catalysts 65. In this alternative configuration, suction by the turbocharger 5 causes the overheating inhibiting agent to pass through the catalysts 65. Therefore, the same effect as that obtained in the case where the overheating inhibiting agent is injected toward the catalysts 65 can be expected.

In a case where the overheating inhibiting agent is inert gas, such as nitrogen, the gas engine system 1 includes: an inert gas cylinder filled with the inert gas, the inert gas cylinder serving as the overheating inhibiting agent source 93; and an open/close valve of the inert gas cylinder, the open/close valve serving as the supply amount adjuster 94. By blowing the inert gas onto the catalysts 65, the catalysts 65 are cooled, and also, the uncombusted fuel gas concentration in the exhaust gas that is present upstream of the catalysts 65 is lowered.

In a case where the overheating inhibiting agent is air, the overheating inhibiting agent source 93 is outside air, and the starter motor (air motor) for driving the flywheel 14 at a start of the gas engine 2 is utilized as the supply amount adjuster 94. By blowing the air onto the catalysts 65, the catalysts 65 are cooled, and also, the uncombusted fuel gas concentration in the exhaust gas that is present upstream of the catalysts 65 is lowered.

In a case where the overheating inhibiting agent is steam, the overheating inhibiting agent source 93 is a boiler (not shown) installed together with the gas engine system 1, and the gas engine system 1 includes an open/close valve as the supply amount adjuster 94. By blowing the steam onto the catalysts 65, the catalysts 65 are cooled, and also, the catalytic reaction is suppressed.

In a case where the overheating inhibiting agent is water, the overheating inhibiting agent source 93 is cooling water (not shown) of the gas engine 2, and the gas engine system 1 includes an open/close valve as the supply amount adjuster 94. By blowing the water onto the catalysts 65, the catalysts 65 are cooled by the latent heat of the water, and the catalytic reaction is suppressed.

As described above, the gas engine system 1 according to the present embodiment includes: the gas engine 2 including the crank shaft 22 and the plurality of cylinders 3 arranged parallel to the axial direction of the crank shaft 22; the exhaust pipe 4 extending over the plurality of cylinders 3 in a bridging manner, the exhaust pipe 4 being a pipe into which the exhaust gas discharged from the gas engine 2 flows; the turbocharger 5 configured to feed compressed air into the gas engine 2, the turbocharger 5 using the exhaust gas as a driving source thereof; the connecting pipes 71 and 72 connecting between the first exhaust gas outlet 41 of the exhaust pipe 4 and the exhaust gas inlet 53 of the turbocharger 5 and forming an exhaust gas passage that extends from the exhaust pipe 4 to the turbocharger 5; the catalyst converter 6 provided in the exhaust gas passage, the catalyst converter 6 incorporating therein the catalysts 65, which oxidize uncombusted fuel gas in the exhaust gas; and the overheating inhibiting device 9 configured to inject, in a part of the exhaust gas passage, at least one of inert gas, air, steam, and water as an overheating inhibiting agent that inhibits overheating of the catalysts 65, the part of the exhaust gas passage extending from the first exhaust gas outlet 41 to the catalyst converter 6.

In the above gas engine system 1, when overheating of the catalysts 65 is expected to occur, the overheating inhibiting device 9 injects the overheating inhibiting agent toward the catalysts 65 of the catalyst converter 6. As a result, the overheating inhibiting agent and the catalysts 65 come into contact with each other, and thereby overheating of the catalysts 65 can be efficiently inhibited/prevented. It should be noted that in a case where the overheating inhibiting agent is inert gas and/or air, the uncombusted fuel gas concentration in the exhaust gas fed to the catalysts 65 is lowered, and thereby overheating of the catalysts 65 is inhibited. Also, in a case where the overheating inhibiting agent is steam and/or water, the activity of the catalysts 65 is lowered, and thereby overheating of the catalysts 65 is inhibited.

In addition, according to the above-described overheating inhibiting device 9, the overheating inhibiting agent comes into direct contact with the catalysts 65, and thereby an overheating inhibiting effect is exerted efficiently. Also, compared to a case where different overheating inhibiting means, for example, a jacket-type cooling device, is adopted as the overheating inhibiting device 9, the overheating inhibiting device 9 can be made more compact, and this configuration makes it possible to prevent burning damage to the catalysts 65 while reducing complexity of the gas engine system 1 and suppressing increase in the size of the gas engine system 1.

The gas engine system 1 according to the present embodiment further includes: the first bypass pipe 7 connecting between the second exhaust gas outlet (upper outlet 42) of the exhaust pipe 4 and the downstream portion of the connecting pipe 72 and forming a bypass passage that extends from the exhaust pipe 4 to the turbocharger 5 in a manner to bypass the catalyst converter 6; and the second bypass pipe 8 connecting between the second exhaust gas outlet (lower outlet 44) of the exhaust pipe 4 and the intake side of the gas engine 2 and forming a bypass passage that extends from the exhaust pipe 4 to the gas engine 2 in a manner to bypass the catalyst converter 6 and the turbocharger 5. It should be noted that, desirably, the gas engine system 1 includes both the first bypass pipe 7 and the second bypass pipe 8. However, the gas engine system 1 may include at least one of the first bypass pipe 7 and the second bypass pipe 8.

In the gas engine system 1 with the above-described configuration, when overheating of the catalysts 65 is expected to occur, all the exhaust gas of the gas engine 2 can be fed to the downstream side of the catalyst converter 6 through the bypass pipes 7 and 8 without passing through the catalyst converter 6. In this manner, overheating of the catalysts 65 of the gas engine 2 is inhibited/prevented, and thereby degradation of the catalysts 65 due to overheating can be inhibited/prevented.

In the gas engine system 1 according to the present embodiment, the exhaust pipe 4 extends parallel to the axial direction of the crank shaft 22. One end portion of the exhaust pipe 4 is provided with the first exhaust gas outlet 41, and the other end portion of the exhaust pipe 4 is provided with the second exhaust gas outlets 42 and 44. The turbocharger 5 is disposed adjacently to the second exhaust gas outlets 42 and 44 of the exhaust pipe 4.

In the above-described gas engine system 1, the turbocharger 5 is disposed adjacently to the second exhaust gas outlets 42 and 44 of the exhaust pipe 4, and the first exhaust gas outlet 41 is provided at one end portion of the exhaust pipe 4, the one end portion being positioned opposite to the other end portion at which the second exhaust gas outlets 42 and 44 are provided. This configuration makes it possible to dispose the catalyst converter 6 adjacently to the first exhaust gas outlet 41 of the exhaust pipe 4. That is, each of the turbocharger 5 and the catalyst converter 6 can be disposed adjacently to the gas engine 2. In addition, the second exhaust gas outlet(s) 42 and/or 44 of the exhaust pipe 4 is/are connected to at least one of the exhaust gas inlet 53 of the turbocharger 5 and the intake side of the gas engine 2 by the bypass pipe(s) 7 and/or 8. Since the second exhaust gas outlets 42 and 44, the exhaust gas inlet 53, and the intake side of the gas engine 2 can be arranged adjacently to each other, the length of the piping of the bypass pipes 7 and 8 can be reduced, which makes it possible to reduce complexity of the gas engine system 1 and suppress increase in the size of the gas engine system 1.

The gas engine system 1 according to the present embodiment further includes: the exhaust valve 75 as a first valve provided on the part of the exhaust gas passage, the part extending from the first exhaust gas outlet 41 to the catalyst converter 6; the bypass valve 85 and/or the exhaust bypass valve 76 as a second valve or second valves provided on the bypass passage(s); the catalyst thermometer 67 configured to measure the temperature of the catalysts 65; the uncombusted fuel gas concentration meter 81 configured to measure the uncombusted fuel gas concentration in the part of the exhaust gas passage, the part extending from the first exhaust gas outlet 41 to the catalyst converter 6; and the controller 80. When the uncombusted fuel gas concentration measured by the uncombusted fuel gas concentration meter 81 is higher than the predetermined allowable concentration and the catalyst temperature measured by the catalyst thermometer 67 is higher than the predetermined allowable temperature, the controller 80 controls the first valve 75 and the second valves 85 and 76 to decrease the degree of opening of the first valve 75 and increase the degree of opening of the second valves 85 and 76.

Accordingly, when the catalyst temperature is higher than the predetermined allowable temperature and the concentration of the uncombusted fuel gas fed to the catalysts 65 is higher than the predetermined allowable concentration, the amount of exhaust gas flowing to the catalysts 65 is decreased, and the amount of exhaust gas flowing downstream in a manner to bypass the catalysts 65 is increased, which makes it possible to inhibit overheating of the catalysts 65.

Further, in the gas engine system 1 according to the present embodiment, when the uncombusted fuel gas concentration measured by the uncombusted fuel gas concentration meter 81 is higher than the predetermined allowable concentration and the catalyst temperature measured by the catalyst thermometer 67 is higher than the predetermined allowable temperature, the controller 80 controls the first valve 75 and the second valves 85 and 76 to close the first valve 75 and open the second valves 85 and 76.

Accordingly, when the temperature of the catalysts 65 is higher than the predetermined allowable temperature and the concentration of the uncombusted fuel gas fed to the catalysts 65 is higher than the predetermined allowable concentration, the exhaust gas flows downstream in a manner to bypass the catalysts 65, which makes it possible to inhibit overheating of the catalysts 65.

Although the preferred embodiment of the present invention is as described above, the above-described configuration can be modified, for example, as described below.

As one example, in the catalyst overheating prevention control performed by the engine controller 80, the exhaust gas inflow into the catalyst converter 6 need not be entirely restricted. Instead, the catalyst overheating prevention control may be performed such that, after decreasing the flow rate of the exhaust gas in the catalyst converter 6 and increasing the flow rate of the exhaust gas in the first bypass pipe 7, the overheating inhibiting device 9 injects the overheating inhibiting agent having a catalyst overheating inhibiting effect. In this case, the flowchart of FIG. 6 may include, instead of step S5, the following steps: the step of operating actuators 86 and 87, which are actuators for opening/closing the exhaust valve 75 and the bypass valve 85, to decrease the degree of opening of the exhaust valve 75 in an open state and increase the degree of opening of the bypass valve 85 in a closed state; and the step of operating the overheating inhibiting device 9 to inject the overheating inhibiting agent having a catalyst overheating inhibiting effect. Accordingly, when the catalyst temperature is higher than the predetermined allowable temperature and the concentration of the uncombusted fuel gas fed to the catalysts 65 is higher than the predetermined allowable concentration, the amount of exhaust gas flowing to the catalysts 65 is decreased, and the amount of exhaust gas flowing downstream in a manner to bypass the catalysts 65 is increased, which makes it possible to inhibit overheating of the catalysts 65.

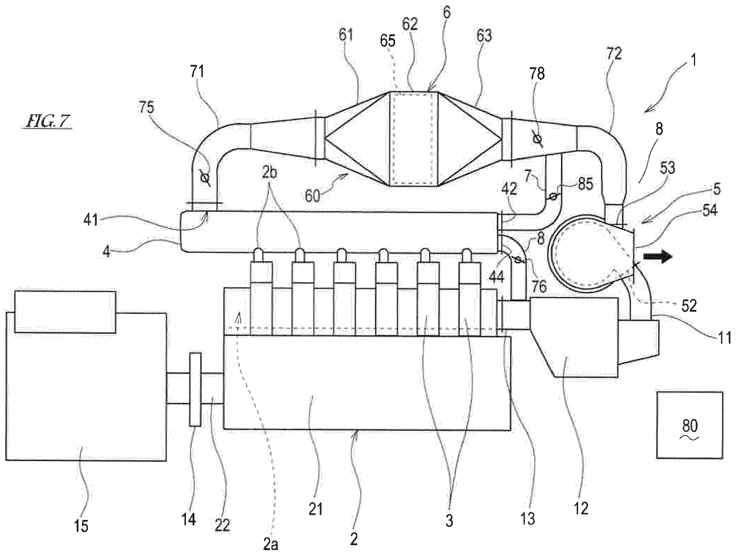

As another example, in the above-described embodiment, the catalyst converter 6 is disposed opposite to the turbocharger 5, with the exhaust pipe 4 being positioned between the catalyst converter 6 and the turbocharger 5. By disposing the catalyst converter 6 in this manner, the catalyst converter 6 and the exhaust gas outlet 41 of the exhaust pipe 4 can be connected to each other by the shortest possible distance. However, as shown in FIG. 7, the catalyst converter 6 may be disposed above the exhaust pipe 4. In this case, the first exhaust gas outlet 41 of the exhaust pipe 4 is open upward, and the first exhaust gas outlet 41 and the upstream-side hood 61 of the catalyst converter 6 are connected to each other by a 90-degree bent pipe. According to this arrangement, the catalyst converter 6 can be disposed by utilizing relatively useless space above the exhaust pipe 4.

As yet another example, in the gas engine system 1 according to the above-described embodiment, when restricting the exhaust gas inflow into the catalyst converter 6 by performing the catalyst overheating prevention control by the engine controller 80, the exhaust gas is fed downstream by means of the first bypass pipe 7 without passing through the catalyst converter 6. Accordingly, the energy of the exhaust gas fed to the upstream side of the turbocharger 5 through the first bypass pipe 7 can be utilized by the turbocharger 5. However, as an alternative, when restricting the exhaust gas inflow into the catalyst converter 6 by performing the catalyst overheating prevention control by the engine controller 80, the exhaust gas of the gas engine 2 may be fed to the intake side of the gas engine 2 through the second bypass pipe 8 without passing through the catalyst converter 6. In this case, in the catalyst overheating prevention control, the engine controller 80 performs control to open/close the exhaust bypass valve 76 of the second bypass pipe 8 instead of opening/closing the bypass valve 85 of the first bypass pipe 7. According to this alternative configuration, the pipe for recirculating the exhaust gas of the gas engine 2 for the adjustment of the excess air ratio λ (i.e., the second bypass pipe 8) can double as the bypass pipe for feeding the exhaust gas of the gas engine 2 to the downstream side in a manner to bypass the catalyst converter 6. That is, the first bypass pipe 7 can be eliminated. This helps to reduce complexity of the system and suppress increase in the size of the system.

### Industrial Applicability

The gas engine system according to the present invention is useful for preventing a situation in which abnormal combustion of the uncombusted fuel gas contained in the exhaust gas of the gas engine causes burning damage to the catalyst.

### Reference Signs List

- 1: gas engine system
- 2: gas engine
- 22: crank shaft
- 3: cylinder
- 4: exhaust pipe
- 41: first exhaust gas outlet
- 42: second exhaust gas outlet (upper outlet)
- 44: second exhaust gas outlet (lower outlet)
- 5: turbocharger
- 53: exhaust gas inlet
- 54: exhaust gas outlet
- 6: catalyst converter
- 60: casing
- 61: upstream-side hood
- 62: casing body
- 63: downstream-side hood
- 65: catalyst
- 67: catalyst thermometer
- 71, 72: connecting pipe
- 75, 85, 76: valve
- 7, 8: bypass pipe
- 9: overheating inhibiting device
- 92a: nozzle
- 80: engine controller
- 81: uncombusted fuel gas concentration meter

## Claims

1. A gas engine system comprising:
a gas engine including a crank shaft and a plurality of cylinders arranged parallel to an axial direction of the crank shaft;
an exhaust pipe extending over the plurality of cylinders in a bridging manner, the exhaust pipe being a pipe into which exhaust gas discharged from the gas engine flows;
a turbocharger configured to feed compressed air into the gas engine, the turbocharger using the exhaust gas as a driving source thereof;
a connecting pipe connecting between a first exhaust gas outlet of the exhaust pipe and an exhaust gas inlet of the turbocharger and forming an exhaust gas passage that extends from the exhaust pipe to the turbocharger;
a catalyst converter provided in the exhaust gas passage, the catalyst converter incorporating therein a catalyst that oxidizes uncombusted fuel gas in the exhaust gas; and
an overheating inhibiting device configured to inject, in a part of the exhaust gas passage, at least one of inert gas, air, steam, and water as an overheating inhibiting agent that inhibits overheating of the catalyst, the part of the exhaust gas passage extending from the first exhaust gas outlet to the catalyst converter.

2. The gas engine system according to claim 1, further comprising at least one of a first bypass pipe and a second bypass pipe, wherein
the first bypass pipe connects between a second exhaust gas outlet of the exhaust pipe and a downstream portion of the connecting pipe, and forms a bypass passage that extends from the exhaust pipe to the turbocharger in a manner to bypass the catalyst converter, and
the second bypass pipe connects between the second exhaust gas outlet of the exhaust pipe and an intake side of the gas engine, and forms a bypass passage that extends from the exhaust pipe to the gas engine in a manner to bypass the catalyst converter and the turbocharger.

3. The gas engine system according to claim 2, wherein
the exhaust pipe extends parallel to the axial direction of the crank shaft,
one end portion of the exhaust pipe is provided with the first exhaust gas outlet, and another end portion of the exhaust pipe is provided with the second exhaust gas outlet, and
the turbocharger is disposed adjacently to the second exhaust gas outlet of the exhaust pipe.

4. The gas engine system according to claim 2 or 3, further comprising:
a first valve provided on the part of the exhaust gas passage, the part extending from the first exhaust gas outlet to the catalyst converter;
a second valve provided on each of the bypass passages;
a catalyst thermometer configured to measure a temperature of the catalyst;
an uncombusted fuel gas concentration meter configured to measure a concentration of the uncombusted fuel gas in the part of the exhaust gas passage, the part extending from the first exhaust gas outlet to the catalyst converter; and
a controller configured to, when the concentration of the uncombusted fuel gas measured by the uncombusted fuel gas concentration meter is higher than a predetermined allowable concentration and the temperature of the catalyst measured by the catalyst thermometer is higher than a predetermined allowable temperature, control the first valve and the second valve to decrease a degree of opening of the first valve and increase a degree of opening of the second valve.

5. The gas engine system according to claim 4, wherein
when the concentration of the uncombusted fuel gas measured by the uncombusted fuel gas concentration meter is higher than the predetermined allowable concentration and the temperature of the catalyst measured by the catalyst thermometer is higher than the predetermined allowable temperature, the controller controls the first valve and the second valve to close the first valve and open the second valve.
